# EUROPEAN PATENT APPLICATION

(11) **EP 3 889 514 A1**
(43) Date of publication of application: **06.10.2021**
(21) Application number: 19889129.3
(22) Date of filing: 12.09.2019
(51) Int. Cl.: F24F 11/36, F24F 7/007, F24F 11/58, F25B 49/02, H04M 11/00, H04Q 9/00

(54) **LEAK DETECTING DEVICE AND LEAK DETECTING SYSTEM**

(30) Priority: 30.11.2018 JP 2018225051
(71) Applicant: Hitachi-Johnson Controls Air Conditioning, Inc., Tokyo 105-0022 (JP)
(72) Inventor: SASAKI, Shunji, Tokyo 105-0022 (JP); INOUE, Takashi, Tokyo 105-0022 (JP); YONEYAMA, Hiroyasu, Tokyo 105-0022 (JP)
(74) Representative: MERH-IP Matias Erny Reichl Hoffmann Patentanwälte PartG mbB
(86) International application number: PCT/JP2019/035880
(87) International publication number: WO 2020/110424

(57) **Abstract**

A leakage sensing apparatus for sensing refrigerant leakage from an air-conditioner in an air-conditioned space air-conditioned by the air-conditioner includes a leakage sensing unit configured to sense the refrigerant leakage, a communication unit configured to transmit notification information indicating that the leakage has been sensed to an external apparatus via a communication network in a case where the leakage sensing unit has sensed the refrigerant leakage, and a power source unit configured to supply power to the leakage sensing apparatus independently of ON/OFF of a power supply to the air-conditioner.

## Description

### TECHNICAL FIELD

The present invention relates to a leakage sensing apparatus and a leakage sensing system for refrigerant used in an air-conditioner.

### BACKGROUND ART

In recent years, it has been demanded for reducing global climate warming that refrigerant used for an air-conditioner shifts to refrigerant with a smaller global warming potential (GWP). However, tendency shows that refrigerant is more easily burnt as the global warming potential decreases. For this reason, it has been demanded that an air-conditioner is equipped with the function of informing a user of refrigerant leakage.

As the technique of informing the refrigerant leakage, there are techniques disclosed in Patent Literature 1 and Patent Literature 2. Patent Literature 1 discloses that a controller configured to determine, based on the state of refrigerant in a refrigerant circuit RC, whether or not refrigerant leakage has been caused is provided and refrigerant leakage information is output to a remote controller or a unit other than the remote controller, such as a unit arranged at an apparatus such as central control equipment arranged at a remote location, when the controller determines, by refrigerant leakage determination processing, that the refrigerant leakage has been caused (e.g., paragraphs 0109, 0114, and 0144 of Patent Literature 1).

Patent Literature 2 discloses that a terminal apparatus (a smartphone, a tablet) having acquired air-conditioner ID information sent from a light emitting unit of equipment (a remote controller) via visible light communication acquires, based on the ID information, equipment operation management information and equipment service information (including a result of test operation for checking refrigerant leakage from an air-conditioner) from a cloud server and displays such information on a terminal apparatus (e.g., paragraphs 0013, 0022, and 0023 and Fig. 2 of Patent Literature 2).

### CITATION LIST

### PATENT LITERATURE

PATENT LITERATURE 1: JP-A-2018-066491
PATENT LITERATURE 2: JP-A-2017-163221

### SUMMARY OF INVENTION

### PROBLEMS TO BE SOLVED BY INVENTION

Patent Literature 1 discloses that the refrigerant leakage is determined based on the state of refrigerant in the refrigerant circuit during operation (e.g., Claim 1, a paragraph 0100), and Patent Literature 2 discloses that automatic operation for checking the refrigerant leakage is performed to determine the refrigerant leakage (e.g., a paragraph 0031 of Patent Literature 2). Thus, in any case, it takes time to determine the refrigerant leakage and check the refrigerant leakage, and it is difficult to, e.g., determine the leakage while the air-conditioner is stopped. Moreover, prompt action is preferably taken in a case where the refrigerant leakage has been sensed.

An object of the present invention is to provide the mechanism for more promptly sensing refrigerant leakage and taking prompt action in a case where the leakage has been sensed.

### SOLUTIONS TO PROBLEMS

The present invention is a leakage sensing apparatus for sensing refrigerant leakage from an air-conditioner in an air-conditioned space air-conditioned by the air-conditioner, the leakage sensing apparatus including: a leakage sensing unit configured to sense the refrigerant leakage; a communication unit configured to transmit notification information indicating that the leakage has been sensed to an external apparatus via a communication network in a case where the leakage sensing unit has sensed the refrigerant leakage; and a power source unit configured to supply power to the leakage sensing apparatus independently of ON/OFF of a power supply to the air-conditioner.

Further, another embodiment of the present invention is a leakage sensing system for sensing refrigerant leakage from an air-conditioner in an air-conditioned space air-conditioned by the air-conditioner, the leakage sensing system including: a leakage sensing unit configured to sense the refrigerant leakage by a power supply independent of ON/OFF of a power supply to the air-conditioner; and a communication unit configured to transmit notification information indicating that the refrigerant leakage has been sensed to an external apparatus via a communication network in a case where the leakage sensing unit has sensed the refrigerant leakage.

Further, still another embodiment of the present invention is a leakage sensing system which includes: a leakage sensing apparatus configured to sense refrigerant leakage from an air-conditioner in an air-conditioned space air-conditioned by the air-conditioner; and a management server apparatus communicable with the leakage sensing apparatus, in which the leakage sensing apparatus includes a leakage sensing unit configured to sense the refrigerant leakage, a communication unit configured to transmit sensing information containing identification information on the leakage sensing apparatus and indicating that the refrigerant leakage has been sensed to the management server apparatus, and a power source unit configured to supply power to the leakage sensing apparatus independently of ON/OFF of a power supply to the air-conditioner, and the management server apparatus includes a storage unit configured to store the identification information on the leakage sensing apparatus and identification information on an external apparatus registered as a leakage notification destination in association with each other and a communication unit configured to transmit notification information indicating that the refrigerant leakage has been sensed to the external apparatus associated with the identification information, which is contained in the sensing information, on the leakage sensing apparatus in the storage unit in a case where the sensing information has been received.

### EFFECTS OF INVENTION

According to the present invention, sensing of leakage can be promptly and properly notified to a notification destination.

### BRIEF DESCRIPTION OF DRAWINGS

Fig. 1 is a diagram of the entirety of a refrigerant leakage system according to a first embodiment.
Fig. 2 is a hardware configuration diagram of a leakage sensing apparatus.
Fig. 3 is a hardware configuration diagram of a management server apparatus.
Fig. 4 is a table showing one example of a data configuration of a notification management table.
Fig. 5 is a flowchart showing leakage sensing processing.
Fig. 6 is an entire configuration diagram of a leakage sensing system according to a second embodiment.
Fig. 7 is an entire configuration diagram of a leakage sensing system according to a third embodiment.
Fig. 8 is a diagram for describing a leakage sensing apparatus according to a fourth embodiment.
Fig. 9 is a sequence diagram showing leakage sensing processing according to the fourth embodiment.

### DESCRIPTION OF EMBODIMENTS

Hereinafter, modes (hereinafter referred to as "embodiments") for carrying out the present invention will be described in detail with reference to the drawings, as necessary. Note that in each figure, the same reference numerals are used to represent common elements, and overlapping description thereof will be omitted.

<<First Embodiment> >

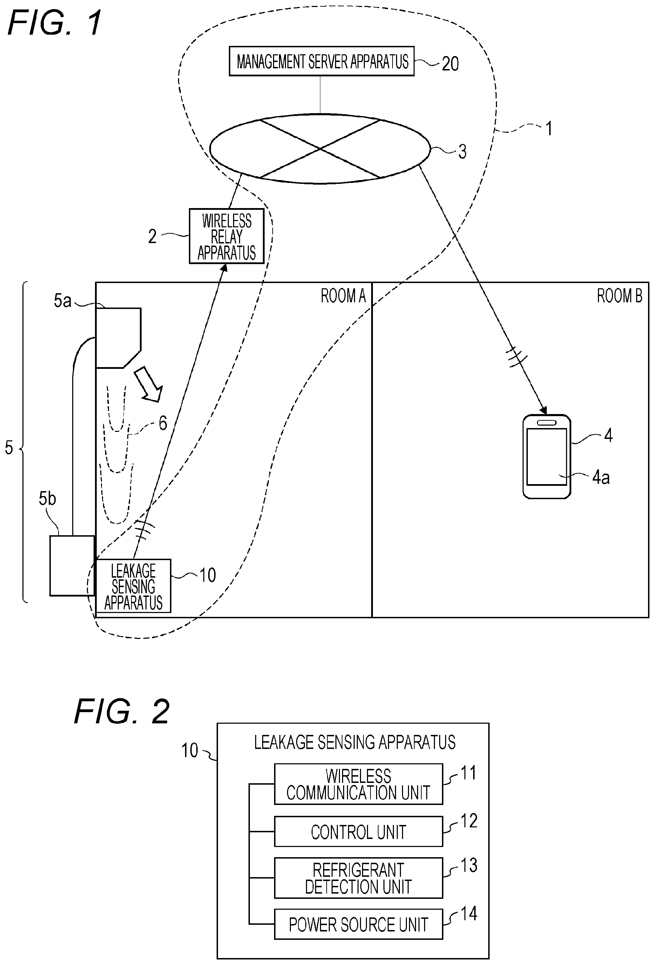

Fig. 1 is a diagram for describing a leakage sensing system 1 according to a first embodiment. The leakage sensing system 1 has a leakage sensing apparatus 10 and a management server apparatus 20. The leakage sensing apparatus 10 and the management server apparatus 20 are communicably connected to each other via a communication network 3. In the present embodiment, the communication network 3 is the Internet, and the leakage sensing apparatus 10 is connected to the communication network 3 via a wireless relay apparatus 2 as shown in Fig. 1. The wireless relay apparatus 2 is, for example, a WiFi router. Note that in the present embodiment, the leakage sensing apparatus 10 is connected to the communication network 3 via the wireless relay apparatus 2, but the method for connecting the leakage sensing apparatus 10 to the communication network 3 is not limited to that of the embodiment. As another example, the leakage sensing apparatus 10 may be connected to the communication network 3 via wireless mobile communication, for example. In this case, the leakage sensing apparatus 10 is connected to the communication network 3 without the wireless relay apparatus 2.

As shown in Fig. 1, the leakage sensing apparatus 10 is placed in a room A as an air-conditioned space where an indoor unit 5a of an air-conditioner 5 is placed, thereby sensing refrigerant leakage from the air-conditioner 5. The air-conditioner 5 has the indoor unit 5a and an outdoor unit 5b. The indoor unit 5a is placed in the room A, and the outdoor unit 5b is placed outside the room A. The air-conditioner 5 airconditions the room A in such a manner that refrigerant such as R410A, R32, or R466A circulates in a refrigeration cycle in which a compressor, a condenser, an expansion valve, and an evaporator are connected to each other. Note that gas of such refrigerant is heavier than air, and therefore, tendency shows that when refrigerant leakage from a heat exchanger or a pipe of the air-conditioner 5 is caused, leaking refrigerant gas (leaking refrigerant 6) is accumulated on a floor surface of the room A where the indoor unit 5a is placed. For this reason, the leakage sensing apparatus 10 is placed below the indoor unit 5a. The installation position of the leakage sensing apparatus 10 is not specifically limited, but a height of equal to or lower than 30 cm from the floor surface right below the indoor unit 5a is preferred.

The leakage sensing apparatus 10 is not limited to the above-described refrigerant and refrigerant heavier than air other than the above-described refrigerant, and can also sense leakage from an air-conditioner using refrigerant lighter than air. In a case where the air-conditioner 5 uses refrigerant lighter than air, the leakage sensing apparatus 10 is preferably provided at a position higher than the indoor unit 5a.

The management server apparatus 20 is an apparatus configured to manage the leakage sensing apparatus 10. In Fig. 1, only the air-conditioner 5 placed in the room A and the leakage sensing apparatus 10 corresponding to the air-conditioner 5 are shown, but the management server apparatus 20 comprehensively manages multiple airconditioners including leakage sensing apparatuses other than the leakage sensing apparatus 10, such as a leakage sensing apparatus corresponding to an air-conditioner placed in a room other than the room A.

In the leakage sensing system 1 of the present embodiment, when the leakage sensing apparatus 10 senses the refrigerant leakage, the leakage sensing apparatus 10 notifies the management server apparatus 20 of such refrigerant leakage. Then, when receiving sensing information, the management server apparatus 20 notifies a mobile terminal apparatus 4, which is registered as a notification destination, of the sensed refrigerant leakage. Information indicating that the refrigerant leakage has been sensed is displayed on a display unit 4a of the mobile terminal apparatus 4. The present processing will be described below in detail. Note that the mobile terminal apparatus 4 is present in a room B in Fig. 1, but also moves to a location other than the room B together with a user of the mobile terminal apparatus 4. Examples of the mobile terminal apparatus 4 include a smartphone, a tablet terminal, and a mobile phone.

Fig. 2 is a hardware configuration diagram of the leakage sensing apparatus 10. The leakage sensing apparatus 10 has a wireless communication unit 11, a control unit 12, a refrigerant sensing unit 13, and a power source unit 14. The wireless communication unit 11 is a communication interface (IF) for connection to the communication network 3 via the wireless relay apparatus 2. The wireless communication unit 11 communicates with the wireless relay apparatus 2 via a wireless LAN. Note that in a case where the leakage sensing apparatus 10 can perform the wireless mobile communication as described above, the wireless communication unit 11 is connected to the communication network 3 via the wireless mobile communication without the wireless relay apparatus 2.

The refrigerant sensing unit 13 senses a leaking refrigerant gas concentration. Specifically, the refrigerant sensing unit 13 includes a semiconductor sensor or a hotwire semiconductor sensor and a microcomputer. The control unit 12 has a CPU and a storage unit, and controls the entirety of the leakage sensing apparatus 10. Note that the processing of the control unit 12 is implemented in such a manner that a computer (the CPU) of the leakage sensing apparatus 10 reads and executes a program stored in the storage unit. Moreover, the control unit 12 senses the refrigerant leakage from the air-conditioner 5. Specifically, the control unit 12 acquires a sensing result (a leaking refrigerant concentration value) from the refrigerant sensing unit 13 on a regular basis, and in a case where the concentration value exceeds a preset threshold, senses that the refrigerant leakage has been caused. That is, the refrigerant sensing unit 13 and the control unit 12 function as a leakage sensing unit.

The power source unit 14 is a power source circuit configured to voltageconvert power supplied from a commercial power source to supply power to the wireless communication unit 11, the control unit 12, and the refrigerant sensing unit 13, for example. For sensing the leakage of the leaking refrigerant 6 while operation of the air-conditioner 5 is stopped, a power source different from that for the air-conditioner 5 is provided as power for the leakage sensing apparatus 10. That is, the power source unit 14 can supply power to the leakage sensing apparatus 10 independently of ON/OFF of a power supply to the air-conditioner 5. Note that the power source unit 14 is the circuit configured to supply power from the commercial power source, but may be, as another example, a circuit configured to supply power from a battery.

As described above, the leakage sensing apparatus 10 is equipment different from the air-conditioner 5, and is equipment different from sensing equipment configured to sense leakage based on an operation state of the air-conditioner 5. Moreover, the leakage sensing apparatus 10 is operated by the power source different from that for the air-conditioner 5, and therefore, can also sense the refrigerant leakage while the air-conditioner 5 is stopped.

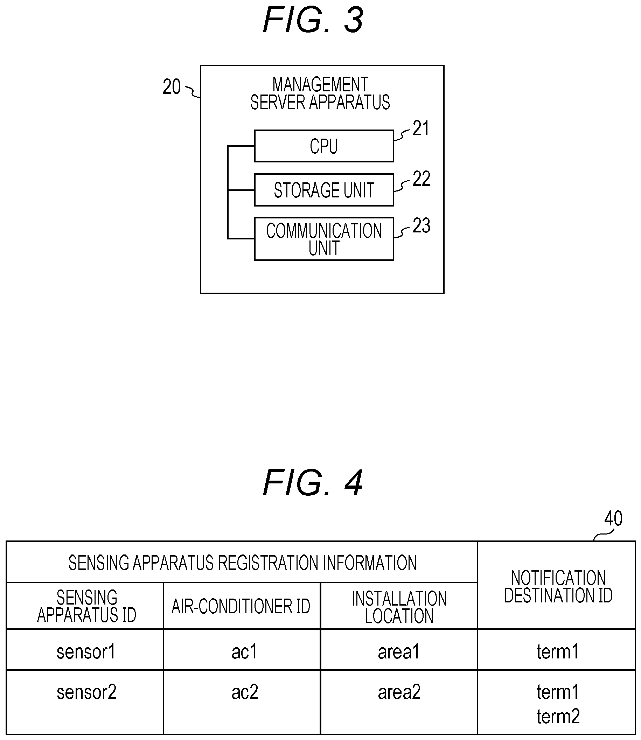

Fig. 3 is a hardware configuration diagram of the management server apparatus 20. The management server apparatus 20 is an information processing apparatus, and has a CPU 21, a storage unit 22, and a communication unit 23. Note that the laterdescribed functions and processing of the management server apparatus 20 are implemented in such a manner that a computer (the CPU 21) of the management server apparatus 20 reads and executes programs stored in the storage unit 22.

Fig. 4 is a table showing a data configuration example of a notification management table 40 stored in the storage unit 22 of the management server apparatus 20. The notification management table 40 stores sensing apparatus registration information and a notification destination ID in association with each other. The sensing apparatus registration information described herein contains a sensing apparatus ID for identifying a leakage sensing apparatus, an air-conditioner ID for identifying an air-conditioner, and an installation location. Moreover, the notification destination ID is identification information on an external apparatus registered as the notification destination in a case where leakage has been sensed in a corresponding leakage sensing apparatus.

Note that one or more notification destinations can be set for a single leakage sensing apparatus. In the example shown in Fig. 4, two notification destination IDs "term1" and "term2" are associated with a sensing apparatus ID "sensor2." Moreover, a notification destination ID "term1" is associated with a sensing apparatus ID "sensor1." As described above, the notification destinations of the leakage sensing apparatuses may overlap with each other.

Moreover, the mobile terminal apparatus 4 owned by a resident in the room A is assumed as the notification destination, but the present invention is not limited to above. As another example, the notification destination may be a mobile terminal apparatus owned by a manager of the air-conditioner 5. As still another example, the air-conditioner 5 may have multiple indoor units, multiple outdoor units, and an air-conditioning management apparatus configured to manage each unit, and the air-conditioning management apparatus may be registered as the notification destination in a case where the air-conditioning management apparatus can be connected to the communication network 3. As still another example, e.g., a management apparatus for a building in which the air-conditioner 5 is placed can be also registered as the notification destination. As described above, as long as an apparatus is connected to the communication network 3, such an apparatus can be registered as the notification destination.

In a case where an air-conditioner has multiple indoor units and a leakage sensing apparatus is provided for each indoor unit, an indoor unit ID is, instead of an air-conditioner ID, stored in association with a sensing apparatus ID. With this configuration, each indoor unit can be identified.

The processing of registering data in the notification management table 40 will be described herein. When installation of the leakage sensing apparatus 10 in the room A is completed, e.g., the manager uses an information processing apparatus such as a PC owned by the manager oneself to transmit, in association with each other, the sensing apparatus ID of the leakage sensing apparatus 10 of which installation has been completed, the air-conditioner ID of the corresponding air-conditioner 5, the installation location, and the notification destination ID to the management server apparatus 20. In this manner, the sensing apparatus registration information and the notification destination ID are registered in association with each other in the notification management table 40.

As another example, after the sensing apparatus registration information has been registered by user operation by, e.g., manager, the notification destination ID may be set using a mobile terminal apparatus (the mobile terminal apparatus 4) owned by a user oneself who requests a notification. In this case, the user of the mobile terminal apparatus 4 accesses the management server apparatus 20 by user operation to receive sensing apparatus registration information list information from the management server apparatus 20. When receiving the list information, the mobile terminal apparatus 4 displays such information on the display unit 4a. At this point, when the user selects desired sensing apparatus registration information, information (e.g., the sensing apparatus ID) for identifying the sensing apparatus registration information and a mobile terminal apparatus ID of the mobile terminal apparatus 4 are, as notification destination registration information, transmitted to the management server apparatus in association with each other. When receiving the notification destination registration information, the management server apparatus 20 registers the notification destination ID (the mobile terminal apparatus ID) indicated by the notification destination registration information in association with the corresponding sensing apparatus registration information.

Note that the processing of registering the notification management table 40 is not limited to above. As another example, in a case where a user interface such as an input unit or a display unit is provided at the leakage sensing apparatus 10, the sensing apparatus registration information and the notification destination ID may be input to the leakage sensing apparatus 10, may be transmitted to the management server apparatus 20, and may be registered in the management server apparatus 20.

Addition, omission, and updating can be made to the contents of the notification management table 40 according to user operation for an apparatus communicable with the management server apparatus 20, as necessary.

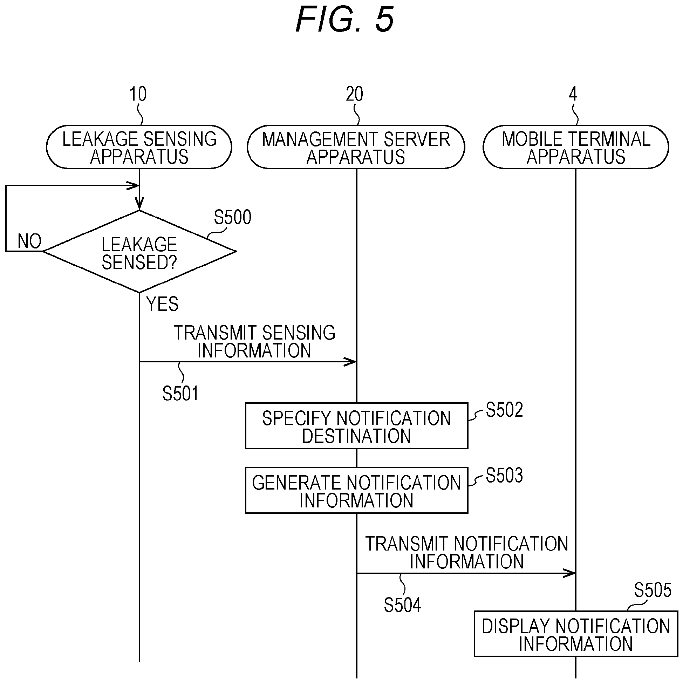

Fig. 5 is a sequence chart showing leakage sensing processing in the leakage sensing system 1. At S500, the control unit 12 of the leakage sensing apparatus 10 stands by until the leakage is sensed. When sensing the leakage (YES at S500), the control unit 12 proceeds the processing to S501. At S501, the wireless communication unit 11 of the leakage sensing apparatus 10 transmits the sensing information to the management server apparatus 20. The sensing information described herein is information indicating that the refrigerant leakage has been sensed, and is information containing the sensing apparatus ID of the leakage sensing apparatus 10. Note that it may only be required that the sensing information is information from which the management server apparatus 20 can determine that the refrigerant leakage has been sensed. Thus, the information indicating that the refrigerant leakage has been sensed is not necessarily contained. For example, in the case of a configuration in which determination on sensing of the refrigerant leakage can be made by reception of the sensing apparatus ID by the management server apparatus 20, the leakage sensing apparatus 10 may transmit the sensing apparatus ID as the sensing information. Note that the sensing apparatus ID is stored in advance in the storage unit of the control unit 12 of the leakage sensing apparatus 10. When receiving the sensing information, the management server apparatus 20 proceeds the processing to S503.

When receiving the sensing information at S501, the CPU 21 of the management server apparatus 20 subsequently refers to the notification management table 40 at S502 to specify the corresponding notification destination ID. Next, at S503, the CPU 21 of the management server apparatus 20 refers to the notification management table 40 to generate notification information. The notification information described herein is information indicating that the leakage has been sensed. In the present embodiment, the notification information contains the information indicating that the leakage has been sensed, the sensing apparatus ID, and the corresponding air-conditioner ID, and the installation location. The timing of the processing of 502 and the processing of S503 is not specifically limited. That is, the CPU 21 may perform the processing of S502 after the processing of S503, or may perform the processing of S502 and the processing of S503 in parallel.

Next, at S504, the communication unit 23 of the management server apparatus 20 transmits the notification information to the notification destination specified by the notification destination ID. When receiving the notification information, the mobile terminal apparatus 4 proceeds the processing to S504. At S505, the mobile terminal apparatus 4 controls the display unit 4a of the mobile terminal apparatus 4 oneself to display the notification information. In the above-described manner, the leakage sensing processing is completed.

As described above, in the leakage sensing system 1 of the present embodiment, in a case where the leakage has been sensed, the notification information is displayed on the display unit 4a of the mobile terminal apparatus 4 registered in advance. Thus, the user of the mobile terminal apparatus 4 can promptly take action against the refrigerant leakage. Moreover, in the leakage sensing system 1 of the present embodiment, the leakage sensing apparatus 10 is provided separately from the air-conditioner 5, and therefore, automatic operation for checking refrigerant leakage from an air-conditioner as in Patent Literature 1 can be omitted. Further, the leakage sensing apparatus 10 is operated by the power source different from that for the air-conditioner 5, and therefore, can sense the leakage even when the air-conditioner 5 is powered off.

As a first variation of the first embodiment, the notification information is not limited to the information described in the embodiment as long as the notification information is information from which the apparatus as the notification destination can determine that the refrigerant leakage has been sensed. That is, it may only be required that the notification information contains at least the information indicating that the leakage has been sensed, and other types of information are not necessarily contained. For example, in a case where a single mobile terminal apparatus is registered only as a notification destination of a single leakage sensing apparatus and a user having received a notification can promptly grasp the leakage sensing apparatus for the notification target and a corresponding air-conditioner, it is enough to provide the notification indicating that the leakage has been sensed. Alternatively, the notification information may further contain information other than the above-described information, such as a sensed leaking refrigerant concentration and sensing date and time.

As a second variation, the leakage sensing apparatus 10 may sense multiple concentration levels, and the management server apparatus 20 may transmit the notification information according to the concentration level to the notification destination. For example, the leakage sensing apparatus 10 senses two concentration levels of a ventilation request level and an entry prohibiting level, and transmits the sensing information distinguishing these levels to the management server apparatus 20. Then, the management server apparatus 20 transmits the notification information containing information indicating the sensed concentration level type (the ventilation request level or the entry prohibiting level) to the notification destination.

As a third variation, communication between the management server apparatus 20 and the leakage sensing apparatus 10 is not limited to that via the Internet. As another example, the management server apparatus 20 and the leakage sensing apparatus 10 may be able to communicate with each other via a wired or wireless LAN. In this case, the leakage sensing apparatus 10 and the management server apparatus 20 may perform, via the LAN, communication necessary for the processing described in the present embodiment. Note that in this case, transmission of the notification information to the mobile terminal apparatus 4 by the management server apparatus 20 is performed via the Internet, but in a case where the notification destination is an apparatus communicable via the LAN, transmission of the notification information by the management server apparatus 20 may be also performed by communication via the LAN.

### «Second Embodiment»

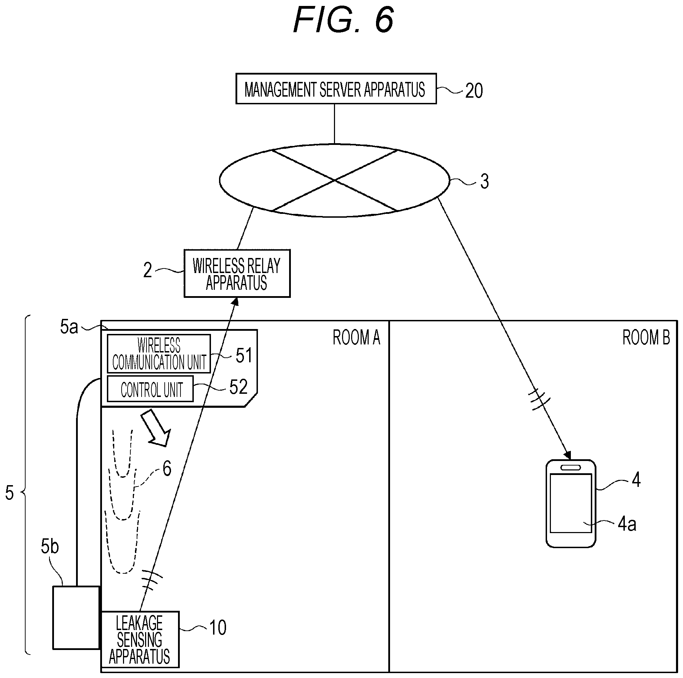

Next, differences of a leakage sensing system 1 according to a second embodiment from the leakage sensing system 1 according to the first embodiment will be mainly described. Fig. 6 is an entire configuration diagram of the leakage sensing system 1 according to the second embodiment. In the present embodiment, a management server apparatus 20 also communicates with an indoor unit 5a via a communication network 3. The indoor unit 5a has a wireless communication unit 51 and a control unit 52. The wireless communication unit 51 is a communication IF for connection to the communication network 3 via a wireless relay apparatus 2. The control unit 52 includes a CPU and a storage unit, and executes processing in such a manner that the CPU executes a program stored in the storage unit.

In the present embodiment, the indoor unit 5a transmits, together with identification information on the indoor unit 5a, operation state information to the management server apparatus 20. The operation state information described herein is information indicating an operation status of an air-conditioner including the indoor unit 5a. The operation state information contains information such as the degree of clogging of a filter, the number of rotations of a fan, a refrigerant temperature at an inlet/outlet of a heat exchanger, and an air temperature at the inlet/outlet of the heat exchanger. The control unit 52 acquires the operation state information from, e.g., sensing results of various sensors provided at the indoor unit 5a. Note that the indoor unit 5a transmits the operation state information to the management server apparatus 20 on a regular basis.

When receiving the operation state information, the management server apparatus 20 stores the operation state information in a storage unit 22 in association with the identification information on the indoor unit 5a. Further, in a case where the management server apparatus 20 has received new operation state information, the management server apparatus 20 writes the newly-received operation state information over the already-stored operation state information, thereby updating the operation state information as necessary.

When receiving sensing information at S501 of the leakage sensing processing described with reference to Fig. 5, a CPU 21 of the management server apparatus 20 specifies an air-conditioner ID linked to a sensing apparatus ID contained in the sensing information in a notification management table 40 (Fig. 4). Then, the CPU 21 of the management server apparatus 20 reads the operation state information stored in the storage unit 22 in association with the air-conditioner ID, thereby generating notification information containing the operation state information. Note that information contained in the notification information other than the operation state information is as described in the first embodiment. Then, a communication unit 23 of the management server apparatus 20 transmits the notification information containing the operation state information to a notification destination with a notification ID specified at S502.

When receiving the notification information accordingly, a mobile terminal apparatus 4 displays the notification information containing the operation state information. Thus, a user of the mobile terminal apparatus 4 can grasp not only sensing of leakage but also the operation state of a corresponding air-conditioner 5. Note that it may only be required that in a case where the notification information is transmitted when the air-conditioner 5 is powered off, the management server apparatus 20 transmits the notification information containing the operation state information, which is stored in the storage unit 22, when the air-conditioner 5 is powered on. Other configurations and other types of processing of the leakage sensing system 1 according to the second embodiment are similar to the configurations and processing of the leakage sensing system 1 according to the first embodiment.

As described above, according to the leakage sensing system 1 of the second embodiment, the user having received the notification of the sensed leakage can grasp not only sensing of the leakage but also the operation state of the corresponding air-conditioner 5.

As a variation of the second embodiment, in a case where the air-conditioner 5 includes multiple indoor units and multiple outdoor units and a management apparatus configured to integrally manage these units is provided, the operation state information may be transmitted to the management server apparatus 20 from the management apparatus via the communication network 3. As described above, an operation state information transmission source is not limited to that of the embodiment.

### <<Third Embodiment> >

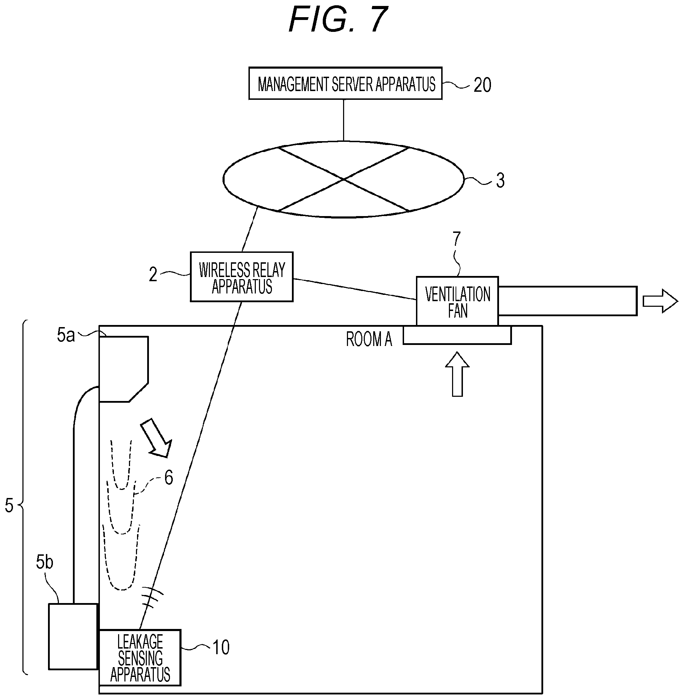

Next, differences of a leakage sensing system 1 according to a third embodiment from the leakage sensing systems 1 according to other embodiments will be mainly described. Fig. 7 is an entire configuration diagram of the leakage sensing system 1 according to the third embodiment. In the third embodiment, a ventilation fan 7 configured to ventilate a room A is provided in the room A. The ventilation fan 7 is provided connectable to a communication network 3 via a wireless relay apparatus 2 as in a leakage sensing apparatus 10. Note that it may only be required that the ventilation fan 7 is connected to the communication network 3, and the ventilation fan 7 is not necessarily connected via the wireless relay apparatus 2. Further, it may only be required that the ventilation fan 7 is communicable with a management server apparatus 20, and such a communication method is not limited to one described in the embodiment. The ventilation fan 7 is provided such that ON/OFF of ventilation is allowed according to an instruction from the management server apparatus 20. Note that the ventilation fan 7 is one example of equipment configured to perform ventilation.

In the present embodiment, a ventilation fan ID for identifying the ventilation fan 7 can be also registered as a notification destination ID in the notification management table 40 described with reference to Fig. 4 in the first embodiment. Note that in this case, information for identifying whether an apparatus identified by each ID is equipment (the ventilation fan) for which ON/OFF of operation is to be controlled or an apparatus to which the notification information is to be transmitted is stored together with the notification destination ID.

Specifically, a user of a mobile terminal apparatus 4 registers, as a notification destination, the ventilation fan ID for identifying the ventilation fan 7 in the notification management table 40. Note that the processing of registering the ventilation fan 7 is not limited to that of the embodiment. The ventilation fan 7 may be registered according to user operation for an apparatus communicable with the management server apparatus 20, such as a mobile terminal apparatus of a manager or the leakage sensing apparatus 10.

In the present embodiment, at S501 of the leakage sensing processing described with reference to Fig. 5 in the first embodiment, when the management server apparatus 20 receives sensing information, the management server apparatus 20 specifies, subsequently at S502, the notification destination ID associated with a sensing apparatus ID indicated by the sensing information in the notification management table 40 (Fig. 4). At this point, in a case where the ventilation fan ID has been specified, the management server apparatus 20 transmits instruction information for instructing the ventilation fan 7 to start ventilation to the ventilation fan 7. When receiving the instruction information, the ventilation fan 7 starts ventilation according to the instruction information. In this manner, the room A can be automatically ventilated. By actuation of the ventilation fan 7, leaking refrigerant can be discharged from the room A. Note that in a case where, e.g., a mobile terminal apparatus ID is, together with the ventilation fan ID, stored as the notification destination ID in the notification management table 40, the management server apparatus 20 transmits the instruction information to the ventilation fan, and transmits the notification information to, e.g., the mobile terminal apparatus. Note that other configurations and other types of processing of the leakage sensing system 1 according to the third embodiment are similar to the configurations and processing of the leakage sensing systems 1 according to other embodiments.

As described above, in the leakage sensing system 1 according to the third embodiment, the management server apparatus 20 can notify the preregistered apparatus of the notification information, and can actuate the ventilation fan 7. Thus, a risk due to leaking refrigerant can be reduced.

### <<Fourth Embodiment> >

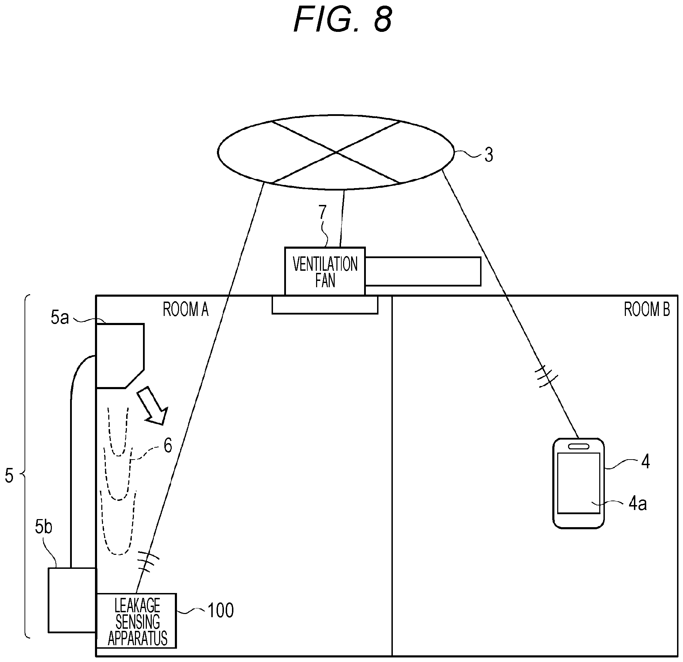

Fig. 8 is a diagram for describing a leakage sensing apparatus 100 according to a fourth embodiment. Hereinafter, differences of the leakage sensing apparatus 100 according to the fourth embodiment from the leakage sensing apparatuses 10 according to other embodiments will be mainly described. The leakage sensing apparatus 100 according to the fourth embodiment directly notifies a mobile terminal apparatus 4 of notification information via a communication network 3. That is, in the present embodiment, not a management server apparatus but the leakage sensing apparatus 10 transmits the notification information. Note that the communication network 3 is the Internet, but the present invention is not limited to above. The communication network 3 may be a wireless LAN, for example. In a case where a notification destination is limited to an apparatus connected via a wired LAN, the communication network 3 may be the wired LAN. Note that in an example of Fig. 8, the leakage sensing apparatus 100 is directly connected to the communication network 3 without a wireless relay apparatus, and as another example, may be connected to the communication network 3 via the wireless relay apparatus as described in other embodiments.

Note that a hardware configuration of the leakage sensing apparatus 100 of the present embodiment is similar to the hardware configuration of the leakage sensing apparatus 10 described with reference to Fig. 2. Note that the leakage sensing apparatus 100 of the present embodiment stores, in a storage unit provided in a control unit 12 as shown in Fig. 2, a sensing apparatus ID, an air-conditioner ID, an installation location, and a notification destination ID. Note that these types of information are transmitted from the mobile terminal apparatus 4 by user operation for the mobile terminal apparatus 4 by a user, and are set to the leakage sensing apparatus 100. Note that as another example, in a case where a user interface is provided at the leakage sensing apparatus 100, these types of information may be input to the leakage sensing apparatus 100.

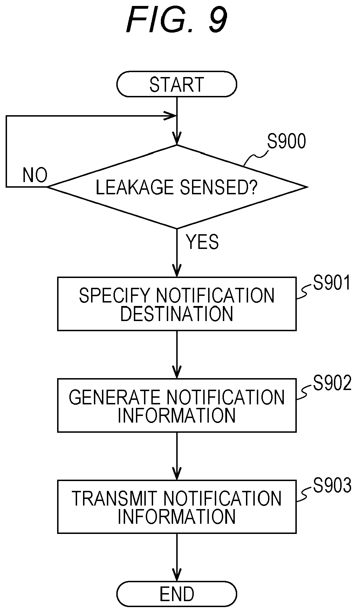

Fig. 9 is a sequence chart showing leakage sensing processing by the leakage sensing apparatus 100 according to the fourth embodiment. At S900, the control unit 12 of the leakage sensing apparatus 100 stands by until leakage is sensed. When sensing the leakage (YES at S900), the control unit 12 proceeds the processing to S901. At S901, the control unit 12 specifies the notification destination ID stored in the storage unit of the control unit 12 itself. Next, at S902, the control unit 12 generates the notification information. Note that the notification information contains, as in the notification information described in the first embodiment, information indicating that the leakage has been sensed, the sensing apparatus ID, a corresponding air-conditioner ID, and the installation location, but may be at least information from which the notification destination can determine that the leakage has been sensed. Next, at S903, a wireless communication unit 11 transmits the notification information to the notification destination identified by the notification destination ID.

In a case where the notification destination is the mobile terminal apparatus 4 shown in Fig. 8, the notification information is displayed on a display unit 4a of the mobile terminal apparatus 4. Note that in the present embodiment, the leakage sensing apparatus 100 can also set an apparatus as the notification destination as long as the apparatus is connected to the communication network 3. Thus, in a case where a mobile terminal apparatus of a manager of an air-conditioner 5, a management apparatus for a building, a management apparatus of the air-conditioner and the like are set as the notification destinations, the leakage sensing apparatus 100 can also transmit the notification information to these apparatuses.

In a case where a ventilation fan ID of a ventilation fan 7 is further registered as the notification destination ID, the leakage sensing apparatus 100 can transmit instruction information for instructing the ventilation fan 7 to start ventilation to the ventilation fan 7. Note that in this case, the leakage sensing apparatus 100 stores, together with the notification destination ID, information for identifying whether an apparatus identified by each ID stored as the notification destination ID is equipment (the ventilation fan) for which ON/OFF of a power source is to be controlled or an apparatus to which the notification information is to be transmitted.

As a variation of the fourth embodiment, the leakage sensing apparatus 100 according to the fourth embodiment may receive operation state information from an indoor unit 5a, and may transmit the notification information including the operation state information to the notification destination. In this case, the indoor unit 5a transmits the operation state information to the leakage sensing apparatus 100 on a regular basis. The leakage sensing apparatus 100 writes, every time the leakage sensing apparatus 100 receives the operation state information, newly-received operation state information over operation state information stored in the storage unit of the leakage sensing apparatus 100 oneself, thereby storing the latest operation state information. Note that the operation state information is similar to the operation state information described in the second embodiment. The leakage sensing apparatus 100 reads, upon transmission of the notification information, the operation state information stored in the storage unit to generate the notification information containing the operation state information, and transmits such information to the notification destination. Note that in this case, an operation state information transmission source is not limited to the indoor unit 5a, and may be, e.g., the management apparatus configured to manage the air-conditioner or an outdoor unit.

Note that the present invention is not limited to the embodiments described above. Moreover, the embodiments have been described in detail for simply describing the present invention, and the present invention is not limited to one including all configurations described above. Further, some of configurations of a certain embodiment can be replaced with configurations of other embodiments, and configurations of other embodiments can be added to a configuration of a certain embodiment. In addition, addition/omission/replacement of configurations of other embodiments can be made to some of the configurations of each embodiment.

### LIST OF REFERENCE SIGNS

- 1: Leakage Sensing System
- 4: Mobile Terminal Apparatus
- 5: Air-Conditioner
- 5a: Indoor Unit
- 5b: Outdoor Unit
- 7: Ventilation Fan
- 10, 100: Leakage Sensing Apparatus
- 20: Management Server Apparatus

## Claims

1. A leakage sensing apparatus for sensing refrigerant leakage from an air-conditioner in an air-conditioned space air-conditioned by the air-conditioner, comprising:
a leakage sensing unit configured to sense the refrigerant leakage;
a communication unit configured to transmit notification information indicating that the leakage has been sensed to an external apparatus in a case where the leakage sensing unit has sensed the refrigerant leakage; and
a power source unit configured to supply power to the leakage sensing apparatus independently of ON/OFF of a power supply to the air-conditioner.

2. The leakage sensing apparatus according to claim 1, wherein
the notification information contains at least one of information for identifying the air-conditioner or information indicating an installation location of the air-conditioner.

3. The leakage sensing apparatus according to claim 1 or 2, wherein
the communication unit receives operation state information indicating an operation state of the air-conditioner from the air-conditioner,
the leakage sensing apparatus further includes a storage unit configured to store the operation state information, and
the communication unit transmits the notification information containing the operation state information to the external apparatus.

4. The leakage sensing apparatus according to any one of claims 1 to 3, wherein
the communication unit transmits the notification information to the external apparatus set in advance.

5. The leakage sensing apparatus according to any one of claims 1 to 4, wherein
the leakage sensing apparatus is communicable with equipment configured to ventilate the air-conditioned space, and
in a case where the leakage sensing unit has sensed the refrigerant leakage, the communication unit transmits instruction information for instructing the equipment to start ventilation to the equipment.

6. The leakage sensing apparatus according to claim 4, further comprising:
an input unit configured to receive user operation; and
a control unit configured to store the external apparatus as a notification destination of the notification information in a storage unit according to the user operation for the input unit,
wherein the communication unit transmits the notification information to the external apparatus as the notification destination stored in the storage unit.

7. A leakage sensing system for sensing refrigerant leakage from an air-conditioner in an air-conditioned space air-conditioned by the air-conditioner, comprising:
a leakage sensing unit configured to sense the refrigerant leakage by a power supply independent of ON/OFF of a power supply to the air-conditioner; and
a communication unit configured to transmit notification information indicating that the refrigerant leakage has been sensed to an external apparatus via a communication network in a case where the leakage sensing unit has sensed the refrigerant leakage.

8. A leakage sensing system comprising:
a leakage sensing apparatus configured to sense refrigerant leakage from an air-conditioner in an air-conditioned space air-conditioned by the air-conditioner; and
a management server apparatus communicable with the leakage sensing apparatus,
wherein the leakage sensing apparatus includes
a leakage sensing unit configured to sense the refrigerant leakage,
a communication unit configured to transmit sensing information containing identification information on the leakage sensing apparatus and indicating that the refrigerant leakage has been sensed to the management server apparatus, and
a power source unit configured to supply power to the leakage sensing apparatus independently of ON/OFF of a power supply to the air-conditioner, and
the management server apparatus includes
a storage unit configured to store the identification information on the leakage sensing apparatus and identification information on an external apparatus registered as a leakage notification destination in association with each other and
a communication unit configured to transmit notification information indicating that the refrigerant leakage has been sensed to the external apparatus associated with the identification information, which is contained in the sensing information, on the leakage sensing apparatus in the storage unit in a case where the sensing information has been received.

9. The leakage sensing system according to claim 8, wherein
the storage unit stores, in association with the identification information on the leakage sensing apparatus and the identification information on the notification destination, at least one of identification information on the air-conditioner placed corresponding to the leakage sensing apparatus or information indicating an installation location of the air-conditioner, and
the communication unit of the management server apparatus transmits, to the external apparatus, the notification information containing at least one of the identification information on the air-conditioner or the information on the installation location of the air-conditioner.

10. The leakage sensing system according to claim 8 or 9, wherein
the communication unit of the management server apparatus receives operation state information indicating an operation state of the air-conditioner from the air-conditioner, and
the communication unit of the management server apparatus transmits, in a case where the refrigerant leakage has been sensed, the notification information containing the operation state information on the air-conditioner associated with the leakage sensing apparatus to the external apparatus.

11. The leakage sensing system according to any one of claims 8 to 10, wherein
the communication unit of the management server apparatus transmits the notification information to the external apparatus set in advance.

12. The leakage sensing system according to any one of claims 8 to 11, wherein
the management server apparatus is communicable with equipment configured to ventilate the air-conditioned space, and
in a case where the leakage sensing unit has sensed the refrigerant leakage, the communication unit of the management server apparatus transmits instruction information for instructing the equipment to start ventilation to the equipment.
